# EUROPÄISCHE PATENTANMELDUNG

(11) **EP 1 505 378 A1**
(43) Veröffentlichungstag der Anmeldung: **09.02.2005**
(21) Anmeldenummer: 04014034.5
(22) Anmeldetag: 16.06.2004
(51) Int. Cl.: G01L 7/08, G01L 9/00, G01L 19/00

(54) **Druckmittler**

(30) Priorität: 07.08.2003 DE 10336914
(71) Anmelder: VEGA Grieshaber KG, 77709 Wolfach (DE)
(72) Erfinder: Kopp, Thomas, Dipl.-Ing., 77709 Wolfach (DE); Jörn, Jacob, Dipl.-Ing., 77709 Wolfach (DE)
(74) Vertreter: Patentanwälte Westphal, Mussgnug & Partner

(57) **Zusammenfassung**

Die Erfindung bezieht sich auf Druckmittler (1), insbesondere Flansch-Druckmittler, mit einem Grundkörper (10) und einer Trennmembran (5), die an einer Seite (14) des Grundkörpers (10) an einem Befestigungsbereich (6) für die Trennmembran (5) befestigt ist und die von außen her mit einem Druck beaufschlagbar ist. Vorteilhafterweise ist zumindest eine Ausnehmung (9) im Grundkörper (10) seitlich des Befestigungsbereichs (6) der Trennmembran (5) ausgebildet, wobei die zumindest eine Ausnehmung (9) in dem Grundkörper (10) derart dimensioniert (t, b) ausgebildet ist, dass den Grundkörper (10) verformende Spannungen nicht oder nur reduziert auf den Befestigungsbereich (6) übertragen werden.

Zusätzlich oder alternativ kann auch vorgesehen werden, dass der Befestigungsbereich (6) für die Trennmembran (5) und die Trennmembran (5) im Bereich einer Spannungsebene (n) des Grundkörpers (10) angeordnet sind, wobei im Bereich der Spannungsebene (n) unter der biegenden Spannung eine zumindest reduzierte Spannung auftritt.

## Beschreibung

Die Erfindung bezieht sich auf einen Druckmittler mit den o-berbegrifflichen Merkmalen des Patentanspruchs 1.

Typische Druckmessvorrichtungen bestehen aus einem Druckmittler und einem mit dem Druckmittler gekoppelten eigentlichen Drucksensor. Über den Druckmittler wird die Druckmessvorrichtung von außen über ein anliegendes Medium mit einem zu messenden Druck beaufschlagt. Der Druckmittler ist ein hydraulisches System, welches den zu messenden Druck über eine elastische Trennmembran auf eine Druckübertragungsflüssigkeit und über die Druckübertragungsflüssigkeit auf das angekoppelte Sensorelement überträgt. Die Trennmembran ist am Grundkörper in einem dem Medium zugewandten Befestigungsbereich befestigt, wobei zwischen der Wandung des Grundkörpers und der Trennmembran eine Kammer mit der Druckübertragungsflüssigkeit ausgebildet ist.

Bei einem sogenannten Flansch-Druckmittler ist die Trennmembran direkt an der dem Prozess bzw. dem zu messenden Medium zugewandten Seite befestigt, in der Regel angeschweißt. Im Umfangsbereich weist der Grundkörper seitlich der Trennmembran beabstandet einen Flansch auf, welcher mehrere Bohrungen aufweist, über die der Flansch mittels einer Schraubverbindung an einem entsprechenden Gegenstück befestigt werden kann. Bei der Montage an einem Gegenstück als einem angekoppelten anderen Bauelement wird zwischen dem Flansch bzw. Grundkörper und dem Gegenstück eine Dichtung, beispielsweise eine Flachdichtung oder ein O-Dichtungsring, eingesetzt, wobei die Dichtung den Befestigungsbereich der Trennmembran umgibt. Beim Anziehen der aus Sicht der Trennmembran jenseits der Dichtung liegenden Schraubverbindung werden in Abhängigkeit des aufgebrachten Drehmoments und der verwendeten Schraubverbindungselemente zum Teil erheblich Kräfte auf den Flansch ausgeübt, welche den Flansch und den gesamten Grundkörper verformen, insbesondere verbiegen. Die den Grundkörper biegenden Kräfte wirken auch im Befestigungsbereich der Trennmembran und werden somit auf die Trennmembran übergeleitet, so dass diese ausgelenkt wird. Die Auslenkung der Trennmembran erzeugt eine entsprechende Druckänderung in dem Druckübertragungsmedium. Eine solche einbaubedingte Druckänderung im Druckübertragungsmedium stellt jedoch einen unerwünschten Messfehler dar, welcher typischerweise bis zu 20 mbar und mehr betragen kann. Da die Einspannkräfte sich über Temperaturänderungen verändern können, ergeben sich zusätzliche Temperaturfehler, welche nicht kompensierbar sind. Außerdem wirkt sich dieser Einbaueffekt auch negativ auf die Langzeitstabilität der Druckmessvorrichtung aus, da die Einspannkräfte durch z. B. ein Setzungsverhalten der Dichtung zwischen Flansch und Gegenstück nicht konstant bleiben.

Die Aufgabe der Erfindung besteht darin, einen Druckmittler bereitzustellen, bei welchem der einbaubedingte Montagefehler durch die Einwirkung der Spannung reduziert wird.

Diese Aufgabe wird durch einen Druckmittler mit den Merkmalen des Patentanspruchs 1 oder durch einen Druckmittler mit den Merkmalen des Patentanspruchs 9 oder durch einen Druckmittler mit den Merkmalen des Anspruchs 16 gelöst.

Vorteilhafte Ausgestaltungen sind Gegenstand abhängiger Ansprüche.

Ein Druckmittler, insbesondere Flansch-Druckmittler, mit einem Grundkörper und einer Trennmembran, die an einer Seite des Grundkörpers in einem Befestigungsbereich für die Trennmembran befestigt ist und die von außen her mit einem zu messenden Druck beaufschlagbar ist, wird vorteilhaft durch zumindest eine Ausnehmung im Grundkörper seitlich zumindest eines Teils des Befestigungsbereichs der Trennmembran ausgebildet, wobei die zumindest eine Ausnehmung in dem Grundkörper zweckmäßigerweise derart dimensioniert ausgebildet ist, dass den Grundkörper verformende Kräfte nicht oder nur reduziert auf die Trennmembran übertragen werden.

Durch die Ausnehmung werden der Befestigungsbereich für die Trennmembran und ein Spannbereich für die Montage des Druckmittlers an einem Gegenstück zumindest im Oberflächenbereich des Grundkörpers mit Blick auf die beim Montieren auf den Grundkörper wirkenden Spannungen entkoppelt. Die Ausnehmung ist somit zweckmäßigerweise zwischen zumindest einem Teil des Befestigungsbereichs der Trennmembran und zwischen den Spannbereichen zum Anspannen des Druckmittlers an dem Gegenstück ausgebildet.

Vorteilhafterweise umgibt die Ausnehmung den gesamten Befestigungsbereich insbesondere umlaufend, wobei die Ausnehmung bei üblichen kreisförmigen Trennmembranen als ringförmige Nut von der Oberfläche des Grundkörpers aus in diesen hineinführt.

Je tiefer der Boden der Ausnehmung ausgebildet ist, desto geringer ist der Einfluss der seitlich der Ausnehmung auf den Grundkörper einwirkenden und diesen biegenden Spannungen mit Blick auf den durch die Ausnehmung entkoppelten Befestigungsbereich der Trennmembran. Vorteilhafterweise ist die Ausnehmung daher so tief wie ein Kammerboden einer Kammer mit einer Druckübertragungsflüssigkeit unterhalb der Trennmembran oder tiefer als der Kammerboden ausgebildet. Gemäß der besonders bevorzugten Ausführungsform ist die Tiefe des Bodens der Ausnehmung so tief oder tiefer wie/als die dem Grundkörper bzw. der Kammer zugewandte Seite der Trennmembran. Insbesondere eine Ausbildung der Ausnehmung tiefer als der Kammerboden reduziert auch eine Verbiegung der Kammerwandung und des Kammerbodens, welche letztendlich auch eine Druckänderung in der Druckübertragungsflüssigkeit bewirken würde.

Bei der besonders bevorzugten Ausführungsform ist der Befestigungsbereich in Form eines insbesondere schmalen Stegs ausgebildet. Erste Untersuchungen zeigen, dass eine Tiefe der Ausnehmung vorteilhafterweise größer als eine Breite des Stegs ist, wobei ein bevorzugter Faktor von Tiefe zu Breite größer oder gleich 2 ist. Vorteilhaft ist auch die Ausbildung des Stegs aus einem elastischen Material, was zu einer weiteren Reduzierung der Einwirkung von auf den Grundkörper wirkenden Spannungen führt.

Bei der bevorzugten Ausführungsform gemäß diesem Konzept wird somit der Spannungsverlauf im Bereich der Befestigung der Trennmembran durch eine Ausnehmung, insbesondere eine umlaufende Nut, unterbrochen. Dadurch werden auftretende Kräfte im Bereich der Membranbefestigung verringert. Besonders günstig wirkt es sich aus, wenn die Ausnehmung sehr dicht am Einspannungsbereich der Membran angeordnet ist, so dass bei topfförmigen Membrankonturen ein federelastischer Steg entsteht, über den die Krafteinleitung weiter verringert wird.

Gemäß einem zweiten Konzept mit eigenständigem erfinderischen Gehalt, vorteilhafterweise aber auch mit Kombinierbarkeit mit dem vorstehenden Konzept, wird wiederum von einem Druckmittler, insbesondere Flansch-Druckmittler mit einem Grundkörper und einer Trennmembran, die an einer Seite des Grundkörpers in einem Befestigungsbereich befestigt ist und die von außen her mit einem Druck beaufschlagbar ist, ausgegangen, wobei der Grundkörper wieder direkt oder indirekt eine Montageanordnung aufweist, die beim Befestigen des Druckmittlers an einem anderen Bauelement bzw. Gegenstück zu einer den Grundkörper biegenden Spannung führt. Vorteilhafterweise kann eine Spannungsreduzierung oder Neutralisierung mit Blick auf die Trennmembran bzw. deren Befestigungsbereich dadurch erzielt werden, dass der Befestigungsbereich für die Trennmembran und die Trennmembran im Bereich einer Spannungsebene des Grundkörpers angeordnet sind, wobei im Bereich der Spannungsebene und der Trennmembran unter der biegenden Kraft eine gegenüber zumindest einer benachbarten Montagefläche des Grundkörpers zumindest deutlich reduzierte Spannung auftritt im Vergleich zu einer Spannung, die sich ergeben würde, wenn die Trennmembran auf der Oberfläche des Grundkörpers angeordnet wäre. Es erfolgt somit ein Zurücksetzen der Druckmittlermembran bzw. deren Befestigungsbereichs in den Bereich einer sogenannten neutralen Faser bzw. Ebene, welche einen neutralen Spannungsverlauf innerhalb des gebogenen Grundkörpers beschreibt. Ausgenutzt wird dabei, dass beim Einspannen des Grundkörpers bzw. Flansches an der Membranseite Druckspannungen und an der gegenüberliegenden Seite des Grundkörpers Zugspannungen auftreten, womit sich zwischen den beiden gegenüberliegenden und mit entgegengesetzten Spannungen beaufschlagten Seiten des Grundkörpers ein spannungs-neutraler Bereich bzw. die sogenannte neutrale Faser befindet. Dieser neutrale Bereich, welcher spannungsfrei oder zumindest spannungsreduziert ist, befindet sich üblicherweise näherungsweise in der Mitte des Grundkörpers bzw. bei einem Grundkörper mit einer gegenüber der Grundkörperstärke reduzierten Flansch-Stärke in einem entsprechend versetzten Bereich. Befindet sich die Membranbefestigung im Bereich der neutralen Faser, werden keine Spannungen in die Trennmembran eingeleitet, so dass über die Membranverformung auch keine Druckänderungen im Druckübertragungsmedium auftreten.

Entsprechend wird die Anordnung vorteilhafterweise derart gewählt, dass im gebogenen Grundkörper die reduzierte Spannung eine minimale Spannung ist. Der Befestigungsbereich für die Trennmembran und die Trennmembran werden entsprechend in einer Ausnehmung des Grundkörpers angeordnet, welche eine den anliegenden Spannungskräften entsprechende Tiefe zum Verlagern des Befestigungsbereichs in eine ausreichende Tiefe aufweist. Die Ausnehmung bildet entsprechend einen Kontaktbereich zu einem druckbeaufschlagenden Medium aus. Bei der Zurücksetzung der Trennmembran bzw. des Befestigungsbereichs für die Trennmembran in einen spannungsneutralen Bereich kann auch eine Verlagerung in einen Tiefenbereich vorgenommen werden, welche zwar für die Trennmembran als solche nicht optimal ist, jedoch zugleich eine ggf. erfolgende Verformung der zur Trennmembran benachbarten Kammerwandung berücksichtigt, welche ebenfalls zu einer Druckvariation der Druckübertragungsflüssigkeit zwischen Kammerboden und Trennmembran führen kann.

Vorteilhafterweise wird die Tiefe der Ausnehmung abhängig von einem Verhältnis von Dimension der Trennmembran zum Biegungsbetrag des Grundkörpers zum Ermöglichen eines bezüglich der Verbiegung spannungsreduzierten, insbesondere spannungsfreien Betrieb der Trennmembran ausgewählt.

Eine dritte Lösung der eingangs angegebenen Aufgabe sieht vor, dass der Grundkörper zwei zueinander parallel angeordnete Oberflächen aufweist, und dass die Trennmembran und deren Befestigungsbereich am Grundkörper mindestens annähernd um 1/10 der Dicke des Grundkörpers von einer der beiden Oberflächen zurück in den Grundkörper versetzt angeordnet ist.

Vorzugsweise beträgt der Versatz mindestens annähernd 1/5 der Dicke des Grundkörpers.

Besonders vorzugsweise ist vorgesehen, dass die Trennmembran und deren Befestigungsbereich mindestens annähernd in der Mitte des Grundkörpers angeordnet ist. Insgesamt weist hierbei der Grundkörper samt Trennmembran eine topfförmige Gestalt auf.

Zum Erzielen optimaler Ergebnisse ist auch eine Kombination der drei Lösungsansätze möglich. Erste Versuche zeigen eine Reduzierung des Einbaueffektes auf eine dadurch verursachte Druckdifferenz von weniger als 0,1 mbar, so dass der Restfehler bei üblichen Anwendungen als vernachlässigbar angesehen werden kann.

Vorteile ergeben sich durch einen minimalen Einbaueffekt, da die Genauigkeit unabhängig vom Anzugsmoment der Flansch-Schrauben ist. Auch ergeben sich keine zusätzlichen Temperaturfehler durch temperaturabhängige Vorspannkräfte sowie eine verbesserte Langzeitstabilität mit Blick auf beispielsweise zeitlich variierende Materialeigenschaften. Insgesamt ergibt sich eine erhöhte Messgenauigkeit.

Ausführungsbeispiele werden nachfolgend anhand der Zeichnung näher erläutert. Es zeigen:
- Fig. 1: eine Teilschnittansicht durch einen Druckmittler gemäß einem ersten Ausführungsbeispiel;
- Fig. 2: eine Ausschnittsvergrößerung gemäß einer demgegenüber variierten Ausführungsform;
- Fig. 3: eine Teilschnittansicht durch einen Druckmittler gemäß einem zweiten Ausführungsbeispiel; und
- Fig. 4: eine Teilschnittansicht durch eine dritte Ausführungsform, welche eine Kombination der beiden Ausführungsbeispiele darstellt.

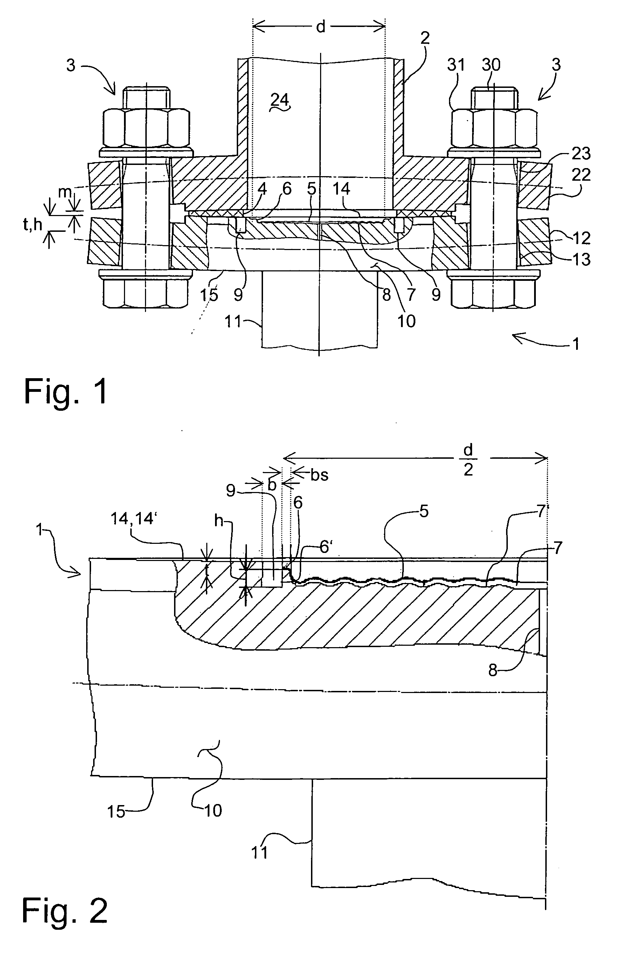

Wie aus Fig. 1 ersichtlich, ist ein Druckmittler 1 einer Druckmessvorrichtung dargestellt, welcher mit einem Gegenstück 2 als weiterem Bauelement über eine Schraubverbindung als einer Befestigungsanordnung bzw. Montageanordnung 3 unter Spannung verbunden ist. Der Druckmittler 1 weist einen Grundkörper 10 auf, von dem ein Anschlussrohr 11 zu einem Drucksensor wegführt. Der seitliche Umfangsrand des Grundkörpers 10 ist als Flansch 12 ausgebildet, wobei auch eine Verbindung über einen separaten Flansch, welcher den Umfangsrand des Grundkörpers 10 übergreift, oder weitere alternative Befestigungsanordnungselemente ausführbar sind. Durch den Flansch 12 führen eine oder mehrere Flansch-Bohrungen 13 hindurch, durch welche eine Schraubverbindung aus einer Schraube 30 und einer Mutter 31 führt. Der Schaft der Schraube 30 führt weiter durch eine Flansch-Bohrung 23, welche in einem gegenüber anliegenden Flansch 22 des Gegenstücks 2 ausgebildet ist. Über den Schraubenkopf, den Schraubenschaft der Schraube 30 und die Mutter 31 werden der Flansch 12 des Druckmittlers 1 und der Flansch 22 des Gegenstücks miteinander verspannt. Das Gegenstück 2 weist eine zentrale Durchgangsöffnung 24 für das Medium auf, dessen Druck oder Druckdifferenz mit Hilfe der Druckmessvorrichtung unter Zwischenschaltung des Druckmittlers 1 zu messen ist. Die Durchgangsöffnung 24 im Gegenstück 2 führt zum zentralen Bereich einer Seite 14 des Grundkörpers 10, welche dem Gegenstück 2 zugewandt ist.

Zwischen dem zentralen Bereich dieser Seite 14 des Grundkörpers 10 bzw. der Durchgangsöffnung 24 des Gegenstücks 2 auf der gegenüberliegenden Seite einerseits und andererseits der Befestigungsanordnung 3 im Umfangsbereich von Grundkörper 10 und Gegenstück 2 ist zumindest eine Dichtung 4, beispielsweise eine ringförmige Dichtungsscheibe oder ein O-Dichtungsring, angeordnet. Dadurch das Verspannen von Grundkörper 10 und Gegenstück 2 in deren Umfangsbereich jenseits der Dichtung 4 baut sich eine durch den Grundkörper 10 führende Spannung auf, welche den Grundkörper 10 relativ zum Gegenstück 2 konkav verbiegt, wie dies anhand der Zeichnung veranschaulicht ist. Die dem Gegenstück 2 zugewandte Seite 14 des Grundkörpers 10 wird dabei gestaucht, während die dazu gegenüberliegende Seite 15 des Grundkörpers 10 einer Zerrspannung bzw. Dehnung unterliegt.

Der Durchgangsöffnung 24 des Gegenstücks 2 gegenüberliegend ist im zentralen Bereich der Seite 14 des Grundkörpers 10 eine Trennmembran 5 als Druckmittlermembran angeordnet, wobei der Umfangsbereich der Trennmembran 5 in einem Befestigungsbereich 6 für die Trennmembran am Grundkörper 10 befestigt ist. Die Trennmembran 5 steht in direkter Wirkverbindung mit dem Medium in der Durchgangsöffnung 24 des Gegenstücks 2. Unterhalb der Trennmembran 5, d. h. in Richtung der benachbarten Wandung des Grundkörpers 10, ist eine Kammer 7 ausgebildet, welche über eine Bohrung bzw. Leitung 8 eine Verbindung zu einem Drucksensor der Druckmessvorrichtung aufweist. Die Kammer 7 und die Leitung 8 sind mit einem Druckmittlermedium bzw. einer Druckübertragungsflüssigkeit gefüllt. Ein Druck bzw. eine Druckdifferenz des Mediums in der Durchgangsöffnung 24 wirkt somit über die Trennmembran 5 auf das Druckmittlermedium in der Kammer 7, wobei das Druckmittlermedium den Druck bzw. die Druckdifferenz an den Drucksensor weiterleitet.

Beschrieben wird somit eine Variation für sich bekannter Druckmittler mit einer Trennmembran 5 als Druckmittlermembrane über einer Kammer mit einem Kammerboden als Überlastbett, wobei die Trennmembran in ihrem Umfangsbereich mittels einer für sich bekannten Membranfügung durch z. B. Kleben, Löten oder Schweißen am Befestigungsbereich 6 des Grundkörpers 10 befestigt ist.

Prinzipiell würde sich die den Grundkörper 10 biegende Spannung auch stauchend auf den zentralen Bereich der Seite 14 des Grundkörpers 10 und damit über den Befestigungsbereich 6 für die Trennmembran auf die Trennmembran 5 auswirken. Zur Vermeidung der Spannungsübertragung ist der Trennbereich 6 für die Trennmembran 5 durch eine Ausnehmung 9 abgesetzt, welche von der Oberfläche der Seite 14 des Grundkörpers 10 in den Grundkörper 10 hineinführt.

Bei einer Verspannung von Druckmittler 1 und Gegenstück 2 mit beispielsweise nur zwei einander gegenüberliegenden Befestigungsanordnungen 3 wäre prinzipiell die Ausbildung von zwei separaten Ausnehmungen 9 ausreichend, welche quer zwischen dem zentralen Bereich mit dem Befestigungsbereich 6 für die Trennmembran 5 und der jeweils benachbarten der Befestigungsanordnungen 3 führt. Bei einer konzentrischen Anordnung von Druckmittler 1, Gegenstück 2 und Trennmembran 5 wird jedoch eine konzentrische Ausnehmung 9 in Form einer Umfangsnut bevorzugt.

Bei dem in Fig. 1 dargestellten Ausführungsbeispiel ist die Tiefe der Ausnehmung 9 relativ zur Oberfläche des Grundkörpers 10 deutlich tiefer als die Tiefe t der Membran 5 bzw. des Bodens der Kammer 7 relativ zur Oberfläche des Grundkörpers 10 gewählt. Außerdem weist der Befestigungsbereich 6 für die Trennmembran 5 eine Breite auf, welche gleich oder größer der Breite b der Ausnehmung 9 ausgebildet ist. Die Dimensionierung der Umfangsnut hinsichtlich Breite b und Tiefe t sowie die Dimensionierung des Befestigungsbereichs 6 für die Trennmembran 5 hinsichtlich dessen Breite bs und Abstand zur Ausnehmung 9 werden vorzugsweise je nach Ausführungsform des Druckmittlers 1 sowie der verwendeten Materialien von Druckmittler 1, Gegenstück 2 und Dichtung 4 sowie deren Ausführungsform geeignet ausgewählt.

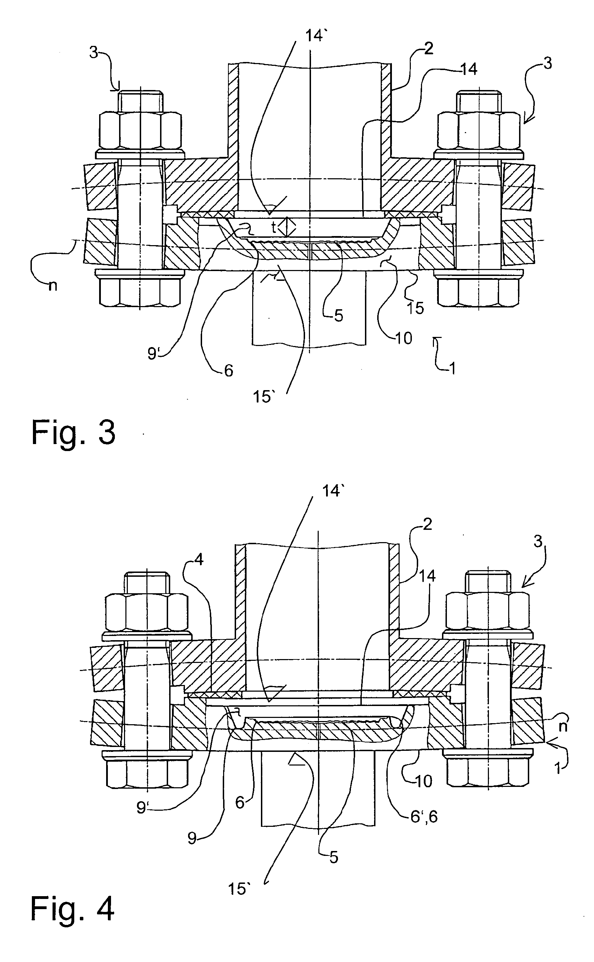

Fig. 2 stellt eine bevorzugte alternative Ausführungsform der in Fig. 1 dargestellten Ausführungsform des ersten Ausführungsbeispiels dar. Für gleiche oder vergleichbare Bauelemente wird jeweils das entsprechende Bezugszeichen verwendet. Außerdem werden zur Vereinfachung vorwiegend Komponenten und Funktionen beschrieben, welche beim vorstehenden Ausführungsbeispiel nicht bereits beschrieben sind.

Dargestellt ist wiederum die Trennmembran 5, welche an der Seite 14 des Grundkörpers 10 in dessen Oberflächenbereich 14' angeordnet ist. Der Befestigungsbereich 6 für die Trennmembran 5 ist als integraler Bestandteil des Grundkörpers 10 ausgebildet, wobei alternativ auch ein Steg als eigenständiges Bauelement auf der Oberfläche des Grundkörpers 10 befestigbar ist. Die Ausnehmung 9 weist bei der dargestellten Ausführungsform eine Tiefe t auf, welche relativ zur Oberfläche 14' des Grundkörpers 10 der Tiefe t des Kammerbodens 7' der Kammer 7 entspricht. Der Befestigungsbereich 6 zum Befestigen der Trennmembran 5 weist eine Höhe h oberhalb des Bodens der Ausnehmung 9 auf, welche niedriger als die Tiefe t der Ausnehmung 9 ist. Bei der dargestellten Ausführungsform wird der Befestigungsbereich 6 für die Trennmembran 5 durch einen schmalen Steg 6' ausgebildet, wobei die Breite bs des Stegs 6' vorzugsweise schmaler als die Breite b der Ausnehmung 9 ist. Bei dem bevorzugten Ausführungsbeispiel ist die Breite bs des Stegs 6' zumindest halb so groß wie die Breite b der Ausnehmung. Vorteilhafterweise besteht der Steg 6' aus einem federelastischen Material, was zu einer weiteren Reduzierung eventuell wirkender Spannungen führt.

Fig. 3 veranschaulicht ein zweites Ausführungsbeispiel, wobei bezüglich Bezugszeichen einzelner Komponenten im Falle der Identität oder Ähnlichkeit der Komponenten wiederum auf vorstehende Ausführungsformen verwiesen wird.

Bei dem dargestellten Druckmittler ist in dem Grundkörper 10 von dessen Seite 14, die dem Gegenstück 2 zugewandt ist, eine Ausnehmung 9' eingelassen. Die Ausnehmung 9' weist in ihrem Bodenbereich den Befestigungsbereich 6 für die Trennmembran 5 auf. Durch diese Anordnung wird der Befestigungsbereich 6 für die Trennmembran 5 zusammen mit der Trennmembran 5 in den Grundkörper 10 hinein verlagert. Die Ausnehmung 9' weist dabei eine Tiefe t auf, welche so gewählt ist, dass der Befestigungsbereich 6 für die Trennmembran 5 und die Trennmembran 5 in einen Spannungsbereich des Grundkörpers 10 verlagert sind, in dem sich eine stauchende Spannung im Bereich der dem Gegenstück 2 zugewandten Seite 14 des Grundkörpers und eine dehnende Spannung im Bereich der gegenüberliegenden Seite 15 des Grundkörpers 10 gegenseitig möglichst weit oder vollständig aufheben. Durch eine strich-punktierte Linie ist eine hinsichtlich der im Grundkörper 10 wirkenden Spannung sogenannte neutrale Faser n bzw. neutrale Spannungsebene skizziert. Die Tiefe t der Ausnehmung 9' wird vorzugsweise unter Berücksichtigung auch einer Vielzahl weiterer Parameter festgelegt, welche auf den Spannungsverlauf im Grundkörper 10, aber auch auf die durch die Ausnehmung 9' reduzierte Festigkeit des Grundkörpers 10 und dergleichen Rücksicht nehmen.

Fig. 4 stellt ein Ausführungsbeispiel dar, bei dem die Ausführungsbeispiele bzw. Ausführungsformen der vorstehend beschriebenen Druckmittler kombiniert sind, um eine noch verbesserte Spannungsentlastung zu erzielen. Wiederum wird bezüglich der Beschreibung von Komponenten und Funktionen unter Bezugnahme auf die Verwendung gleicher Bezugszeichen auf die vorstehenden Ausführungen verwiesen.

Dargestellt ist eine Ausnehmung 9', welche von der oberen Oberfläche 14' der Seite 14 des Grundkörpers 10, die dem Gegenstück 2 zugewandt ist, in den Grundkörper 10 hineinragt. Der Befestigungsbereich 6' für die Trennmembran 5 ist wiederum relativ zur Oberfläche 14' des Grundkörpers 10 in Richtung der hinsichtlich wirkender Befestigungsspannungen neutralen Faser bzw. Ebene n verlagert. Außerdem führt vom Bodenbereich der Ausnehmung 9' seitlich des Befestigungsbereichs 6 für die Trennmembran 5 eine tiefer in den Grundkörper 10 führende nutförmige Ausnehmung 9. Bei dem dargestellten Ausführungsbeispiel reicht die Umfangsnut als weitere Ausnehmung 9 bis zu dem Bereich der neutralen Ebene n. Der Vollständigkeit halber sei noch erwähnt, dass die untere Oberfläche des Grundkörpers 10 das Bezugszeichen 15' trägt.

Vorteilhafterweise können die einzelnen beschriebenen Elemente in verschiedenartigster Art und Weise kombiniert werden, wobei insbesondere Breite bs und Höhe h des Stegs sowie Tiefe t der Ausnehmungen 9 variiert werden können. Berücksichtigt werden können dabei auch verbleibende Verformungen des Kammerbodens oder der seitlichen Kammerwandungen der Kammer 7 durch auf den Grundkörper 10 wirkende Spannungen, welche letztendlich ebenfalls eine Auswirkung auf das Druckmittlermedium innerhalb der Kammer 7 haben. Berücksichtigt werden kann weiterhin Material, Form und Dimensionierung der Dichtung 4, z. B. auch deren Dicke bzw. Mächtigkeit m, welche zwischen Druckmittler 1 bzw. dessen Grundkörper 10 und dem Gegenstück 2 eingesetzt ist und mit zu einer Verspannung des Grundkörpers 10 beim Zusammenmontieren von Druckmittler 1 und Gegenstück 2 führt. Auch der Durchmesser d der Trennmembran wird vorteilhafterweise bei der Ausnehmungsdimension berücksichtigt.

### Bezugszeichenliste:

- 1: Druckmittler
- 2: Gegenstück
- 3: Befestigungsanordnung/Schraubverbindung
- 4: Dichtung
- 5: Trennmembran
- 6: Befestigungsbereich für 5
- 6': Steg
- 7: Kammer mit Druckmittlermedium
- 8: Leitung von 7 zu einem Drucksensor
- 9, 9': Ausnehmungen
- 10: Grundkörper von 1
- 11: Rohr/Ableitung von 1
- 12: Flansch an 1
- 13: Flansch-Bohrung in 12
- 14: Seite von 10 in Richtung 2
- 14': erste Oberfläche des Grundkörpers 10
- 15: Seite gegenüber von 14
- 15': zweite Oberfläche des Grundkörpers 10
- 22: Flansch an 2
- 23: Flansch-Bohrung in 22
- 24: Durchgangsöffnung für bezüglich Druck zu messendes Medium in 2
- t: Tiefe von 9
- b: Breite von 9
- bs: Breite von 6, 6'
- n: neutrale Faser/Ebene
- m: Dicke von 4
- d: Durchmesser von 5

## Patentansprüche

1. Druckmittler (1), insbesondere Flansch-Druckmittler, mit
- einem Grundkörper (10) und
- einer Trennmembran (5), die an einer Seite (14) des Grundkörpers (10) an einem Befestigungsbereich (6) für die Trennmembran (5) befestigt ist und die von außen her mit einem Druck beaufschlagbar ist,
**gekennzeichnet durch**
- zumindest eine Ausnehmung (9) im Grundkörper (10) seitlich zumindest eines Teils des Befestigungsbereichs (6) der Trennmembran (5), wobei die zumindest eine Ausnehmung (9) in dem Grundkörper (10) derart dimensioniert (t, b) ausgebildet ist, dass den Grundkörper (10) verformende Spannungen nicht oder nur reduziert auf den Befestigungsbereich (6) bzw. die Trennmembran (5) übertragen werden.

2. Druckmittler nach Anspruch 1, bei dem die Ausnehmung (9) den Befestigungsbereich (6) für die Trennmembran (5) umgibt.

3. Druckmittler nach Anspruch 1 oder 2, bei dem ein Boden der Ausnehmung (9) so tief oder tiefer ist wie/als die dem Grundkörper (10) zugewandte Seite der Trennmembran (5).

4. Druckmittler nach einem vorstehenden Anspruch, bei dem ein Boden der Ausnehmung (9) so tief oder tiefer ist wie/als ein Kammerboden (7') einer Kammer (7) unterhalb der Trennmembran (5).

5. Druckmittler nach einem vorstehenden Anspruch, bei dem der Befestigungsbereich (6) für die Trennmembran (5) durch einen Steg, insbesondere schmalen Steg (6') ausgebildet ist.

6. Druckmittler nach Anspruch 5, bei dem die Tiefe (t) der Ausnehmung (9) größer als eine Breite (bs) des Stegs (6') ist.

7. Druckmittler nach Anspruch 6, bei dem ein Faktor von der Tiefe (t) der Ausnehmung (9) oder einer Höhe (h) des Stegs (6') vom Boden der Ausnehmung (9) relativ zur Breite (bs) des Stegs (6') größer oder gleich 2 ist.

8. Druckmittler nach einem der Ansprüche 5 - 7, bei dem der Steg (6') aus einem elastischen Material ausgebildet ist.

9. Druckmittler (1), insbesondere Flansch-Druckmittler, insbesondere Druckmittler nach einem vorstehenden Anspruch, mit
- einem Grundkörper (10),
- einer Trennmembran (5), die an einer Seite (14) des Grundkörpers (10) an einem Befestigungsbereich (6) für die Trennmembran (5) befestigt ist und die von außen her mit einem Druck beaufschlagbar ist, und
- einer den Grundkörper (10) beim Befestigen des Druckmittlers (1) an einem Gegenstück (2) unter Spannung biegenden Montageanordnung (3),
**dadurch gekennzeichnet, dass**
- der Befestigungsbereich (6) für die Trennmembran (5) und/oder die Trennmembran (5) im Bereich einer Spannungsebene (n) des Grundkörpers (10) angeordnet sind, wobei im Bereich der Spannungsebene (n) und der Trennmembran (5) unter der biegenden Kraft eine deutlich reduzierte Spannung auftritt im Vergleich zu einer Spannung, die sich ergeben würde, wenn die Trennmembran (5) auf der Oberfläche (14') des Grundkörpers (10) angeordnet wäre.

10. Druckmittler nach Anspruch 9, bei dem der Bereich der reduzierten Spannung im gebogenen Grundkörper (10) ein Bereich einer minimalen Spannung ist.

11. Druckmittler nach Anspruch 9 oder 10, bei dem der Befestigungsbereich (6) für die Trennmembran (5) und die Trennmembran (5) in einer Ausnehmung (9') des Grundkörpers (10) in einer Tiefe (t) angeordnet sind.

12. Druckmittler nach Anspruch 11, bei dem die Ausnehmung (9') einen Kontaktbereich zu einem druckbeaufschlagenden Medium aus dem Gegenstück (2) bildet.

13. Druckmittler nach einem vorstehenden Anspruch mit einer Montageanordnung (3), insbesondere einem Flansch (12), zum Befestigen des Druckmittlers (1) an dem Gegenstück (2) derart, dass die Seite (14) des Grundkörpers (10) mit der Trennmembran (5) dem Gegenstück (2) zugewandt ist, wobei der Grundkörper bei der Montage mittels der Montageanordnung (3) relativ zum Gegenstück (2) konkav gebogen verspannt ist.

14. Druckmittler nach Anspruch 13, wobei die Tiefe (t) der Ausnehmung (9, 9') abhängig von einem Verhältnis von Dimension (d) der Trennmembran (5) zum Biegungsbetrag des Grundkörpers (10) zum Ermöglichen eines bezüglich der Verbiegung spannungsreduzierten, insbesondere spannungsfreien Betrieb der Trennmembran (5) ausgewählt ist.

15. Druckmittler nach Anspruch 13 oder 14, wobei der Grundkörper (10) an der Seite (14) zum Gegenstück (2) die Trennmembran (5) aufweist, seitlich relativ zu zumindest zwei Seiten der Trennmembran (5) zwischen Grundkörper (10) und dem Gegenstück (2) eine Dichtung (4) eingesetzt ist und die Montageanordnung (3) aus Sicht der Trennmembran (5) jenseits der Dichtung (4) den Grundkörper (10) und das Gegenstück (2) miteinander verspannt.

16. Druckmittler nach einem der vorgenannten Ansprüche oder nach dem Oberbegriff des Anspruchs 1,
**dadurch gekennzeichnet, dass**
der Grundkörper (10) zwei zueinander parallel angeordnete Oberflächen (14', 15') aufweist, und dass die Trennmembran (5) und deren Befestigungsbereich (6) am Grundkörper (10) mindestens annähernd um 1/10 der Dicke des Grundkörpers (10) von einer der beiden Oberflächen (14', 15') zurück in den Grundkörper (10) versetzt angeordnet ist.

17. Druckmittler nach Anspruch 16,
**dadurch gekennzeichnet, dass**
der Versatz mindestens annähernd 1/5 der Dicke des Grundkörpers (10) beträgt.

18. Druckmittler nach Anspruch 16 oder 17,
**dadurch gekennzeichnet, dass**
die Trennmembran (5) und deren Befestigungsbereich (6) mindestens annähernd in der Mitte des Grundkörpers (10) angeordnet ist.

19. Druckmittler nach einem der Ansprüche 16 bis 18,
**dadurch gekennzeichnet, dass**
der Grundkörper (10) samt Trennmembran (5) eine topfförmige Gestalt aufweist.
